# FASCICULE DE BREVET EUROPEEN

(11) **EP 4 283 107 B1**
(45) Date de publication et mention de la délivrance du brevet: **21.01.2026**
(21) Numéro de dépôt: 23161436.3
(22) Date de dépôt: 13.03.2023
(51) Int. Cl.: F02C 9/28

(54) **PROCÉDÉ ET SYSTÈME DE DÉTECTION D'INGESTION DE GAZ CHAUDS DANS UNE ENTRÉE D'AIR DE MOTEUR**
VERFAHREN UND SYSTEM ZUR ERKENNUNG DER ANSAUGUNG VON HEISSGAS IN EINEN LUFTEINLASS EINES MOTORS
METHOD AND SYSTEM FOR DETECTING HOT GAS INGESTION IN AN ENGINE AIR INTAKE

(30) Priorité: 24.05.2022 FR 2204983
(43) Date de publication de la demande: 29.11.2023
(73) Titulaire: AIRBUS HELICOPTERS, 13725 Marignane Cedex (FR)
(72) Inventeur: FAYARD, Benoît, 13250 SAINT CHAMAS (FR); CERQUEIRA, Stéphane, 13090 AIX EN PROVENCE (FR)
(74) Mandataire: GPI Brevets

(56) Documents cités:
- US-A- 3 484 060
- US-A- 5 779 169
- US-A1- 2016 123 175
- US-A1- 2020 248 623
- US-B2- 9 731 831
- "Appendix A Data Transfer in Digital Aircraft Systems", 20 May 2008 (2008-05-20), pages 199 - 234, XP055708903, Retrieved from the Internet <URL:https://link.springer.com/content/pdf/bbm:978-3-540-73619-6/1.pdf> [retrieved on 20200625]

## Description

La présente invention concerne un procédé et un système de détection d'ingestion de gaz chauds dans une entrée d'air de moteur.

Un véhicule, et notamment un aéronef, peut comprendre au moins une entrée d'air alimentant en air frais au moins un moteur. En fonctionnement, le moteur peut de son côté éjecter des gaz chauds. Des gaz chauds peuvent en outre être éjectés du véhicule par d'autres systèmes, tel un système de conditionnement d'air par exemple.

Certains véhicules sont susceptibles de rester dans une position stationnaire voire de reculer. Par exemple, un giravion, et en particulier un hélicoptère ou d'autres types d'aéronefs, peuvent avoir la capacité de rester sensiblement immobiles en vol, voire de reculer. Au sein d'un tel véhicule, les gaz chauds éjectés par le véhicule sont alors susceptibles d'être ingérés par la ou les entrées d'air, notamment en fonction du vent relatif. Un aéronef peut aussi traverser des poches d'air chaud, à proximité de torchères par exemple. Un tel phénomène est parfois dénommé « hot gases ingestion » en langue anglaise. L'ingestion de gaz chauds comme comburant peut perturber le fonctionnement du ou des moteurs, voire peut induire un phénomène de pompage.

La ou les entrées d'air ainsi que la ou les sorties de gaz chauds peuvent être définies pour faire face à ce phénomène, au moins dans des conditions prédéterminées.

Dès lors, certains règlements de certification d'aéronefs peuvent prévoir qu'un moteur doit fonctionner normalement en présence d'un vent relatif prédéterminé. Par exemple, lorsque l'aéronef est dans une position stationnaire, le ou les moteurs doivent fonctionner normalement en présence d'un vent ayant une vitesse inférieure ou égale à un seuil défini dans le règlement, quelle que soit la direction du vent.

Le document « Appendix A Data Transfert in Digital Aircraft Systems", 20 mai 2008 (2008-05-20), pages 199-234, XP055708903, extrait de l'internet : U RL:HTTPS://link.spinger.com/content/pdf/bbm :978-3-540-73619-6/1 .pdf (extrait le 2020-06-25), évoque dans la page 218 l'ingestion de gaz chauds.

Le document CN106050418 A est éloigné de cette problématique en décrivant au contraire un système de recyclage des gaz éjectés par une turbine à gaz. Une conduite de retour est agencée entre une ouverture d'aspiration de gaz d'un compresseur à gaz et une ouverture d'échappement de la turbine, la conduite de retour étant munie d'une vanne de réglage de débit.

Il en va de même du document CN205908373 U.

Le document US 2020/248623 A1 est aussi éloigné de cette problématique en ayant trait à la distorsion de température et de pression d'une entrée d'air.

Il en va de même du document US 2016/123175 A1 qui décrit un contrôleur configuré pour déterminer une probabilité de décrochage d'un compresseur.

Les documents US 3 484 060 A, US 9 731 831 B2 et US 5 779 169 A sont aussi connus.

La présente invention a alors pour objet de proposer un procédé visant à alerter un pilote d'un risque d'ingestion de gaz chauds.

L'invention vise ainsi un procédé de détection d'une ingestion de gaz chauds au sein d'un aéronef, ledit aéronef ayant au moins une entrée d'air configurée pour alimenter en air frais au moins un moteur.

Le procédé comporte les étapes suivantes réalisées successivement et itérativement :
- mesure de valeurs courantes de plusieurs paramètres de surveillance respectifs avec des senseurs respectifs, lesdits plusieurs paramètres de surveillance comprenant une température extérieure de l'air entourant l'aéronef et une température de l'air ingéré dans ladite entrée d'air,
- traitement avec un contrôleur desdites valeurs courantes avec un modèle d'intelligence artificielle à apprentissage automatique mémorisé, ledit modèle d'intelligence artificielle à apprentissage automatique étant configuré pour détecter à partir desdites valeurs courantes une ingestion de gaz chauds dans ladite entrée d'air,
- suite audit traitement, génération avec un alerteur d'une alerte tant qu'une dite ingestion de gaz chauds dans ladite entrée d'air est détectée par ledit modèle d'intelligence artificielle à apprentissage automatique durant ledit traitement.

L'expression « température de l'air ingéré dans ladite entrée d'air » peut désigner la température régnant dans l'entrée d'air, dans une partie d'un moteur alimenté en air par l'entré d'air, ou encore à proximité immédiate d'une entrée d'air et à l'extérieur de la cellule de l'aéronef. Cette expression « température de l'air ingéré dans ladite entrée d'air » est à interpréter dans le sens d'une température image de la température de l'air pénétrant dans le ou les moteurs associés et servant de comburant.

Ainsi, ce procédé prévoit de mesurer les valeurs courantes de paramètres de surveillance prédéterminés. Ces paramètres comprennent au minimum la température de l'air ingéré dans l'entrée d'air et la température extérieure de l'air entourant l'aéronef. Cette température extérieure de l'air entourant l'aéronef est dénommée parfois « Outside Air temperature » en langue anglaise ou OAT selon l'acronyme correspondant.

Dès lors, les valeurs mesurées sont injectées dans un modèle d'intelligence artificielle à apprentissage automatique prédéterminé embarqué dans l'aéronef. Un tel modèle peut être établi de manière usuelle dans le domaine de l'intelligence artificielle.

Dès lors, si le modèle d'intelligence artificielle à apprentissage automatique détecte une ingestion de gaz chauds, une alerte est émise par un alerteur.

En effet, la simple surveillance de la température dans ou à proximité immédiate d'une entrée d'air est insuffisante. En effet, cette température peut notamment varier en l'absence d'ingestion de gaz chauds, en raison notamment des évolutions de l'aéronef et de changements d'altitude. Il est néanmoins possible d'élaborer un modèle d'intelligence artificielle à apprentissage automatique basé sur les paramètres de surveillance précités, afin de déterminer si des gaz chauds sont effectivement ingérés dans le moteur. Dans l'affirmative, une alerte est générée. Le pilote de l'aéronef peut en prendre connaissance afin de mettre en œuvre des actions correctives s'il le juge possible et nécessaire afin de préserver le ou les moteurs.

Le procédé peut de plus comporter une ou plusieurs des caractéristiques qui suivent.

Selon une possibilité, ledit traitement peut comporter une détermination avec le modèle d'intelligence artificielle à apprentissage automatique d'une probabilité d'ingestion de gaz chauds dans ladite entrée d'air, ladite alerte étant émise tant que ladite probabilité est supérieure à un premier seuil de probabilité.

En présence d'une probabilité élevée d'ingestion de gaz chauds, l'alerte est alors émise.

Eventuellement, le procédé peut comporter une génération d'une pré-alerte avec l'alerteur tant que ladite probabilité est inférieure ou égale au premier seuil de probabilité et supérieure à un deuxième seuil de probabilité, le deuxième seuil de probabilité étant inférieur au premier seuil de probabilité, la pré-alerte étant différente de l'alerte.

Le terme « différente » signifie que l'alerte et la pré-alerte sont distinguables par un individu, visuellement, oralement ou tactilement par exemple.

En présence d'une probabilité plus faible d'ingestion de gaz chauds, la pré-alerte est alors émise. Le pilote peut alors décider de poursuivre la manœuvre ou peut décider de mettre en œuvre des actions correctives.

L'alerte et la pré-alerte peuvent être respectivement des alertes dites « rouge » et « ambre » dans le domaine aéronautique.

Selon une possibilité, ledit traitement peut comporter une détermination avec le modèle d'intelligence artificielle à apprentissage automatique d'une augmentation de température de l'air ingéré par ledit au moins un moteur depuis un temps prédéterminé, ladite alerte étant émise tant que ladite augmentation de température est supérieure à un premier seuil de température.

Selon ce traitement, le modèle ne génère pas une probabilité mais évalue la valeur d'une augmentation de température depuis un temps prédéterminé. Une telle augmentation peut être jugée porteuse de la présence de gaz chauds ingérés. Par exemple, le premier seuil de température peut correspondre à une élévation de température de 5 degrés Celsius des gaz ingérés.

Eventuellement, le procédé peut comporter une génération d'une pré-alerte avec l'alerteur tant que ladite augmentation de température est inférieure ou égale au premier seuil de température et supérieure à un deuxième seuil de température, le deuxième seuil de température étant inférieur au premier seuil de température, la pré-alerte étant différente de l'alerte.

Le terme « différente » signifie que l'alerte et la pré-alerte sont distinguables par un individu, visuellement, oralement ou tactilement par exemple.

Par exemple, le deuxième seuil de température peut correspondre à une élévation de température de 3 degrés Celsius des gaz ingérés.

L'alerte et la pré-alerte peuvent être respectivement des alertes dites « rouge » et « ambre » dans le domaine aéronautique.

Selon une possibilité compatible avec les précédentes, ladite mesure de valeurs courantes de plusieurs paramètres de surveillance peut comporter une mesure de ladite température de l'air ingéré dans ladite entrée d'air avec un senseur de température d'air ingéré agencé dans ladite entrée d'air ou en dehors de l'entrée d'air et dans une zone traversée par ledit air ingéré lorsque l'aéronef est immobile et en l'absence de vent.

La température de l'air ingéré peut être mesurée dans l'entrée d'air, ou à proximité de l'entrée d'air.

Selon une possibilité compatible avec les précédentes, ladite mesure de valeurs courantes de plusieurs paramètres de surveillance peut comporter une mesure de ladite température extérieure avec un senseur de température d'air extérieur agencé en dehors d'une cellule de l'aéronef dans un volume qui n'est pas traversé par ledit air ingéré et lesdits gaz chauds lorsque l'aéronef est immobile et en l'absence de vent.

La température de l'air extérieur peut être mesurée à distance de l'entrée d'air et du ou des émetteurs de gaz chauds pour être précise.

Selon une possibilité compatible avec les précédentes, ladite mesure de valeurs courantes de plusieurs paramètres de surveillance peut comporter une mesure d'une vitesse de l'aéronef avec un senseur de vitesse.

La vitesse peut par exemple être une vitesse air, ou une vitesse par rapport au sol. La vitesse de déplacement d'un aéronef a une influence sur une éventuelle présence de gaz chauds dans l'entrée d'air. En présence d'une vitesse air importante et d'un déplacement vers l'avant, les risques d'ingestion de gaz chauds sont faibles, sauf à traverser une bulle de gaz chauds n'ayant pas l'aéronef pour origine. La vitesse de déplacement d'un aéronef peut donc représenter un paramètre de surveillance.

Selon une possibilité compatible avec les précédentes, ladite mesure de valeurs courantes de plusieurs paramètres de surveillance peut comporter une mesure d'une valeur d'altitude de l'aéronef avec un senseur d'altitude.

L'altitude ou la hauteur de l'aéronef a une influence sur la température régnant à l'extérieur de l'aéronef, et a donc une influence sur une éventuelle ingestion de gaz chauds. Une altitude ou une hauteur peut donc représenter un paramètre de surveillance, la valeur d'altitude pouvant être la valeur de l'altitude ou de la hauteur de l'aéronef.

Selon une possibilité compatible avec les précédentes, ladite mesure de valeurs courantes de plusieurs paramètres de surveillance peut comporter une mesure d'un déplacement de l'aéronef avec un senseur de déplacement.

Le sens de déplacement de l'aéronef peut participer à la faculté d'aspiration de l'aéronef de gaz chauds, notamment si l'aéronef se déplace selon un sens allant de l'entrée d'air vers un organe de l'aéronef émetteur de gaz chauds. Ce sens de déplacement peut donc représenter un paramètre de surveillance.

Selon une possibilité compatible avec les précédentes, ladite mesure de valeurs courantes de plusieurs paramètres de surveillance peut comporter une mesure d'au moins un angle d'assiette de l'aéronef avec un senseur d'assiette.

L'assiette d'un aéronef peut varier et peut contribuer à la faculté de placer une entrée d'air dans un flux de gaz chauds. Ainsi, un angle d'assiette en roulis, en tangage, et/ou en lacet peut donc représenter un paramètre de surveillance.

Outre un procédé, l'invention vise un système de détection pour détecter une ingestion de gaz chauds au sein d'un aéronef. Ce système de détection comporte plusieurs senseurs pour mesurer respectivement des valeurs de plusieurs paramètres de surveillance, lesdits plusieurs senseurs comprenant un senseur de température d'air ingéré et un senseur de température d'air extérieur. Le système de détection comprend un contrôleur en communication avec lesdits senseurs et configuré pour appliquer le procédé de l'invention. Le système de détection comprenant un alerteur en communication avec ledit contrôleur et configuré aussi pour appliquer le procédé de l'invention.

Les plusieurs senseurs peuvent comprendre au moins un des senseurs suivants : un senseur de vitesse mesurant une vitesse d'un aéronef équipé du système de détection, un senseur d'altitude mesurant une valeur d'altitude d'un aéronef équipé du système de détection, un senseur de déplacement mesurant une information image d'un déplacement présent ou à venir d'un aéronef équipé du système de détection, un senseur d'assiette mesurant au moins un angle d'assiette d'un aéronef équipé du système de détection.

L'invention vise aussi un aéronef ayant au moins une entrée d'air configurée pour alimenter en air frais au moins un moteur, par exemple un moteur thermique fonctionnant à l'aide d'un carburant et un comburant, cet aéronef étant muni d'un tel système de détection.

L'invention et ses avantages apparaîtront avec plus de détails dans le cadre de la description qui suit avec des exemples donnés à titre illustratif en référence aux figures annexées qui représentent :
la figure 1, un schéma illustrant un système de détection selon l'invention agencé sur un aéronef,
la figure 2, un schéma illustrant un système de détection, et
la figure 3, un schéma illustrant le procédé selon l'invention.

Les éléments présents dans plusieurs figures distinctes sont affectés d'une seule et même référence.

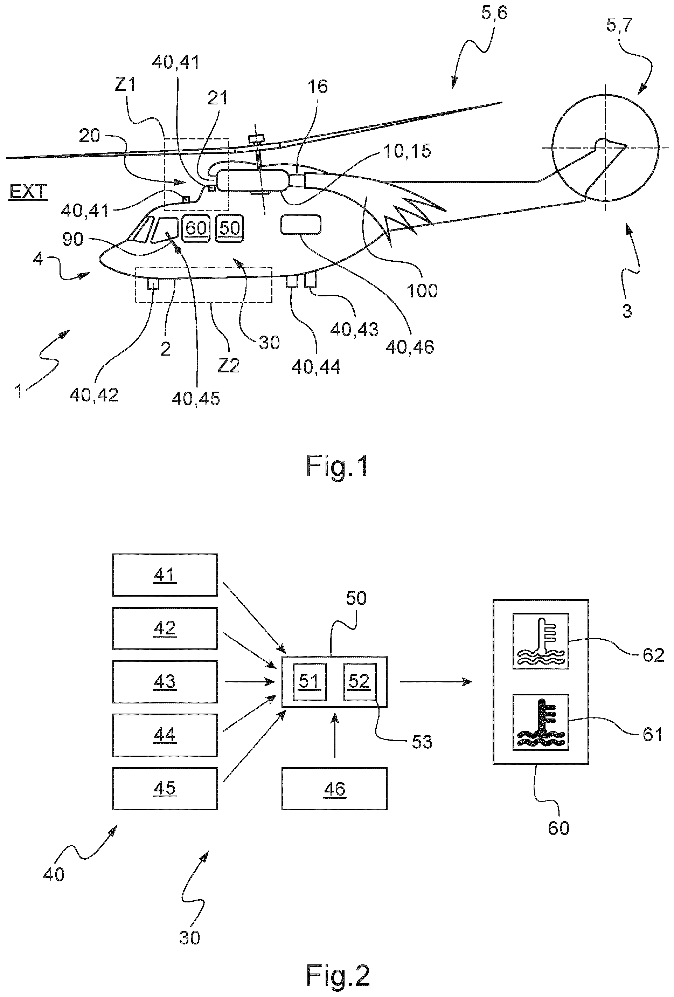

La figure 1 illustre un exemple d'aéronef 1 possiblement sujet à un phénomène d'ingestion non souhaitée de gaz chauds 100.

Un tel aéronef 1 peut comprendre une cellule 2 s'étendant de l'arrière vers l'avant d'une queue 3 vers un nez 4. Cette cellule 2 porte une installation motrice 10 comprenant au moins un moteur 15. Le ou les moteurs peuvent être éventuellement des moteurs thermiques fonctionnant à l'aide de carburant, tels que des turbomoteurs ou des moteurs à pistons par exemple. Par exemple, cette installation motrice a pour fonction de mettre en mouvement au moins un rotor 5, tel qu'une voilure tournante 6 et/ou un rotor auxiliaire 7.

Le ou les moteurs 15 éjectent des gaz chauds 100, éventuellement via une tuyère 16. Une telle tuyère 16 s'étend éventuellement d'une sortie de gaz d'au moins un moteur 15 jusqu'à un milieu extérieur EXT entourant l'aéronef 1.

En outre, l'aéronef 1 comporte au moins une entrée d'air 20 alimentant en air frais un ou des moteurs 15 à partir du milieu extérieur EXT. Par exemple, une telle entrée d'air 20 comporte au moins un conduit 21 mettant en communication fluidique un ou des moteurs 15 avec le milieu extérieur EXT.

Selon l'exemple illustré, les gaz chauds 100 sont éjectés par le ou les moteurs 15 vers l'arrière de l'aéronef 1, selon un sens allant du nez 4 vers la queue 3. La ou les entrées d'air 20 se situent à l'inverse entre un ou des moteurs 15 et le nez 4 de l'aéronef 1. Ainsi durant un vol d'avancement et à compter d'une vitesse air seuil, des gaz chauds 100 ne risquent pas d'être aspirés dans une entrée d'air 20. Toutefois, une telle aspiration est susceptible de se produire, par exemple durant un vol stationnaire avec un fort vent arrière.

Dès lors, l'aéronef 1 est pourvu d'un système de détection 30 pour détecter l'ingestion éventuelle de gaz chauds 100 dans un ou des moteurs 15.

Le système de détection 30 comporte des senseurs 40 pour mesurer respectivement des valeurs courantes de plusieurs paramètres de surveillance. La référence 40 est attribuable à n'importe quel senseur, les références 41, 42, 43, 44, 45, 46 désignant des senseurs particuliers si besoin.

Le terme « senseur » désigne un capteur physique capable de mesurer directement la valeur du paramètre en question mais aussi un système pouvant comprendre un ou plusieurs capteurs physiques ainsi que des moyens de traitement du signal permettant de fournir une estimation de la valeur du paramètre à partir de la ou des mesures fournies par ce ou ces capteurs physiques. De manière similaire, le terme « valeur » désigne aussi bien une mesure brute d'un capteur physique qu'une mesure obtenue par un traitement de signal plus ou moins complexe à partir de mesures brutes.

Ainsi, l'aéronef comporte a minima au moins un senseur de température d'air ingéré 41 et au moins un senseur de température d'air extérieur 42. Chaque senseur de température peut prendre la forme d'un senseur usuel.

Eventuellement, le système de détection 30 peut comporter un unique senseur de température d'air ingéré 41, ou plusieurs senseurs de température d'air ingéré 41 agencés dans des endroits différents. Par exemple, le système de détection 30 peut comporter un senseur de température d'air ingéré 41 dans chaque entrée d'air.

Le ou les senseurs de température d'air ingéré 41 ont pour fonction de mesurer une valeur de température image d'une température des gaz ingérés par le ou les moteur 15. Ainsi, un senseur de température d'air ingéré 41 peut être agencé dans une entrée d'air 20, et par exemple dans un conduit 21. Alternativement, un senseur de température d'air ingéré 41 peut être disposé en dehors d'une entrée d'air 20, voire dans une zone Z1 traversée par l'air ingéré lorsque l'aéronef 1 est immobile et en l'absence de vent.

Une telle zone Z1 peut se situer devant l'entrée d'air 20, selon un sens de circulation de l'air dans une surface d'entrée de l'entrée d'air.

Eventuellement, le système de détection 30 peut comporter un unique senseur de température d'air extérieur 42, ou plusieurs senseurs de température d'air extérieur 42 agencés dans des endroits différents.

Le ou les senseurs de température d'air extérieur 42 ont pour fonction de mesurer une valeur courante de température image d'une température du milieu EXT. Ainsi, un senseur de température d'air extérieur 42 peut être agencé en dehors de la cellule 2, voire en particulier dans un volume Z2 qui n'est pas traversé par l'air ingéré et les gaz chauds lorsque l'aéronef 1 est immobile et en l'absence de vent. Par exemple, un tel senseur de température d'air extérieur 42 peut être agencé sous une face inférieure de la cellule de l'aéronef en regard du sol en vol, la ou les entrées d'air 20 et la ou les sorties de gaz chauds étant situées à l'inverse au niveau du sommet de la cellule 2.

Le système de détection 30 peut de plus comporter des senseurs complémentaires.

Selon une possibilité, le système de détection 30 peut comprendre au moins un senseur de vitesse 43 configuré pour mesurer une vitesse d'un aéronef 1 selon au moins une direction. La vitesse peut être une vitesse air ou une vitesse propre par exemple.

Par exemple, un senseur de vitesse 43 peut comprendre un système anémobarométrique, un récepteur d'un système de localisation par satellites, une centrale inertielle...

Selon une possibilité, le système de détection 30 peut comprendre au moins un senseur d'altitude 44 configuré pour mesurer une valeur courante d'altitude de l'aéronef 1. La valeur courante d'altitude peut être une altitude en tant que telle, ou une hauteur éventuellement. Un senseur d'altitude 44 peut comprendre par exemple une radiosonde, un système anémobarométrique, un récepteur d'un système de localisation par satellites etc.

Selon une possibilité, le système de détection 30 peut comprendre au moins un senseur de déplacement 45 configuré pour mesurer une information image d'un déplacement présent ou à venir de l'aéronef.

Par exemple, un senseur de déplacement 45 peut comprendre par exemple un récepteur d'un système de localisation par satellites, une centrale inertielle, etc.

Selon un autre exemple, un senseur de déplacement 45 émet une mesure variant en fonction de la sollicitation d'une interface homme-machine de pilotage 90 de l'aéronef 1. La manœuvre d'une telle interface homme-machine de pilotage 90 induit en effet un déplacement de l'aéronef 1 dans l'air. A titre d'exemple uniquement, un senseur de déplacement 45 peut comprendre un senseur de position coopérant avec un levier de pas collectif, un manche de commande cyclique, un palonnier, etc.

Selon une possibilité, le système de détection 30 peut comprendre un senseur d'assiette 46 mesurant au moins un angle d'assiette de l'aéronef 1.

Par exemple, un senseur d'assiette 46 peut comprendre par exemple une centrale inertielle, un ou plusieurs inclinomètres etc.

Indépendamment du nombre et des natures de senseurs 40, le système de détection 30 comprend un contrôleur 50 en communication avec les senseurs 40, par des liaisons filaires ou non filaires. Le contrôleur reçoit ainsi des signaux, analogiques ou numériques, émis par les senseurs 40 et porteurs des valeurs mesurées respectivement.

Le contrôleur 50 peut comprendre une ou des unités de traitement, chaque unité de traitement pouvant comprendre par exemple au moins un processeur 51 et au moins une mémoire 53, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 50 mémorise, par exemple dans une mémoire 53, un modèle d'intelligence artificielle à apprentissage automatique 52. Ce modèle d'intelligence artificielle à apprentissage automatique 52 est configuré pour détecter à partir des valeurs mesurées des paramètres de surveillance d'une ingestion de gaz chauds dans la ou les entrées d'air 20.

Un modèle d'intelligence artificielle à apprentissage automatique est parfois qualifié de « Machine Learning » en langue anglaise en raison de sa faculté à apprendre le problème posé à partir de données d'apprentissage. Ces données d'apprentissage peuvent notamment être générées durant des vols multiples, et notamment des vols d'essais dédiés ou non à cette application.

Le modèle d'intelligence artificielle à apprentissage automatique peut être d'un type usuel, ou pouvant par exemple prendre la forme d'un algorithme de régression, linéaire ou logistique, d'un arbre de décision, d'un algorithme dit de " clustering " en langue anglaise, d'un algorithme d'association ou d'un réseau de neurones voire d'un réseau de neurones " profond " composé de multiples couches cachées.

Le modèle d'intelligence artificielle à apprentissage automatique peut être obtenu à l'aide d'un apprentissage supervisé, d'un apprentissage non supervisé, voire d'un apprentissage par renforcement.

Par ailleurs, le système de détection 30 comprend un alerteur 60 apte à générer au moins une alerte voire une pré-alerte sur commande du contrôleur 50. Ainsi l'alerteur 60 est en liaison filaire ou non filaire avec le contrôleur 50. Le contrôleur 50 transmet à l'alerteur un signal porteur d'une information indiquant éventuellement si une alerte ou une pré-alerte doit être émise. Chaque alerte et pré-alerte peut prendre la forme d'une alarme visuelle, par exemple par le biais de l'émission d'une lumière avec une ou des diodes électroluminescentes ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

La figure 2 illustre de manière schématique un tel système de détection 30.

En particulier, la figure 2 illustre la possibilité de générer une alerte 61 et une pré-alerte 62 éventuellement différentes, par exemple en présentant des couleurs.

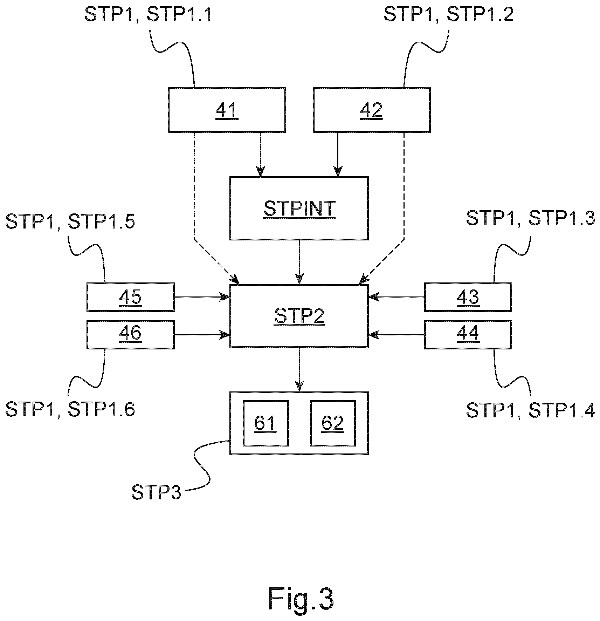

La figure 3 illustre le procédé mis en œuvre par un système de détection 30 selon l'invention. Ce procédé comporte de multiples étapes réalisées cycliquement à chaque instant de calcul.

Ce procédé comporte une mesure STP1 de valeurs courantes des paramètres de surveillance respectifs avec les senseurs 40 respectifs.

La mesure STP1 de valeurs courantes des paramètres de surveillance comporte la mesure STP1.1 de la température de l'air ingéré dans l'entrée d'air 20 avec au moins un senseur de température d'air ingéré 41. Eventuellement, une moyenne peut être effectuée en présence de plusieurs de senseur de température d'air ingéré 41.

La mesure STP1 de valeurs courantes des paramètres de surveillance comporte la mesure STP1.2 de la température extérieure avec le senseur de température d'air extérieur 42. Eventuellement, une moyenne peut être effectuée en présence de plusieurs de senseur de température d'air extérieur 42.

Eventuellement, les valeurs courantes de la température de l'air ingéré et de la température extérieure sont transmises directement au contrôleur 50 pour traitement selon l'option représentée en pointillés.

Alternativement, les valeurs courantes de la température de l'air ingéré et de la température extérieure sont fusionnées en une mesure de différence entre les valeurs de la température de l'air ingéré et de la température extérieure pour traitement. La différence peut être calculée par le contrôleur 50 ou une autre unité de traitement par exemple.

La mesure STP1 de valeurs courantes des paramètres de surveillance peut comporter la mesure STP1.3 d'une vitesse de l'aéronef 1 avec un senseur de vitesse 43.

La mesure STP1 de valeurs courantes des paramètres de surveillance comporte la mesure STP1.4 d'une valeur courante d'altitude de l'aéronef 1 avec un senseur d'altitude 44.

La mesure STP1 de valeurs courantes des paramètres de surveillance comporte la mesure STP1.5 d'un déplacement de l'aéronef 1 dans l'air avec un senseur de déplacement 45.

La mesure STP1 de valeurs courantes des paramètres de surveillance comporte la mesure STP1.6 d'au moins un angle d'assiette de l'aéronef 1 avec un senseur d'assiette 46.

Indépendamment des mesures effectuées durant l'étape de mesure STP1 de valeurs courantes des paramètres de surveillance, le procédé appliqué par le système de détection 30 comporte le traitement STP2 avec le modèle d'intelligence artificielle à apprentissage automatique 52 mémorisé des valeurs courantes.

Les valeurs courantes des paramètres de surveillance sont injectées dans le modèle d'intelligence artificielle à apprentissage automatique. Ce modèle d'intelligence artificielle à apprentissage automatique est configuré pour détecter à partir desdites valeurs courantes si une entrée d'air 20 ingère des gaz chauds 100, voire risque d'ingérer des gaz chauds.

Dans l'affirmative, suite à ce traitement STP2, le procédé comporte la génération STP3 avec l'alerteur 60 d'une alerte 61, tant qu'une telle ingestion de gaz chauds 100 est détectée.

Eventuellement, une pré-alerte 62, différente de l'alerte 61, est générée non pas quand une ingestion de gaz chauds 100 est détectée, mais lorsque le modèle d'intelligence artificielle à apprentissage automatique 52 détecte soit un risque, soit une possible ingestion de gaz chauds présente ou à venir.

Selon une première alternative, durant le traitement STP2 le modèle d'intelligence artificielle à apprentissage automatique 52 est configuré pour déterminer une probabilité d'ingestion de gaz chauds 100 dans la ou les entrées d'air 20. Le contrôleur 50 transmet alors, durant l'étape de génération d'une alerte STP3, un signal à l'alerteur 60 pour que l'alerteur 60 émette l'alerte 61, cette alerte 61 étant émise tant que la probabilité est supérieure à un premier seuil de probabilité. Eventuellement, le contrôleur 50 transmet, durant l'étape de génération d'une alerte STP3, un signal à l'alerteur 60 pour que l'alerteur 60 émette une pré-alerte 62, cette pré-alerte 62 étant émise tant que la probabilité est inférieure ou égale au premier seuil de probabilité et supérieure à un deuxième seuil de probabilité.

Selon une seconde alternative, durant le traitement STP2 le modèle d'intelligence artificielle à apprentissage automatique 52 est configuré pour quantifier une augmentation de température de l'air ingéré par le ou les moteurs 15 depuis un temps prédéterminé, par exemple lors des 30 dernières secondes. Le contrôleur 50 transmet alors, durant l'étape de génération d'une alerte STP3, un signal à l'alerteur 60 pour que l'alerteur 60 émette l'alerte 61 tant que l'augmentation de température est supérieure à un premier seuil de température. Eventuellement, le contrôleur 50 transmet, durant l'étape de génération d'une alerte STP3, un signal à l'alerteur 60 pour que l'alerteur 60 émette une pré-alerte 62 tant que l'augmentation de température est inférieure ou égale au premier seuil de température et supérieure à un deuxième seuil de température.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. L'objet de la présente invention est défini dans les revendications annexées.

## Revendications

1. Procédé de détection d'une ingestion de gaz chauds au sein d'un aéronef (1), ledit aéronef (1) ayant au moins une entrée d'air (20) configurée pour alimenter en air frais au moins un moteur (15),
**caractérisé en ce que** le procédé comporte les étapes suivantes réalisées successivement et itérativement :
- mesure (STP1) de valeurs courantes de plusieurs paramètres de surveillance respectifs avec des senseurs (40) respectifs, lesdits plusieurs paramètres de surveillance comprenant une température extérieure de l'air entourant l'aéronef (1) et une température de l'air ingéré dans ladite entrée d'air (20),
- traitement (STP2) avec un contrôleur (50) desdites valeurs courantes avec un modèle d'intelligence artificielle à apprentissage automatique (52) mémorisé, ledit modèle d'intelligence artificielle à apprentissage automatique étant configuré pour détecter à partir desdites valeurs courantes une ingestion de gaz chauds dans ladite entrée d'air (20),
- suite au dit traitement (STP2), génération (STP3) avec un alerteur (60) d'une alerte (61) tant qu'une dite ingestion de gaz chauds dans ladite entrée d'air (20) est détectée par ledit modèle d'intelligence artificielle à apprentissage automatique (52) durant ledit traitement (STP2).

2. Procédé selon la revendication 1,
où le traitement comporte une détermination avec le modèle d'intelligence artificielle à apprentissage automatique (52) d'une probabilité d'ingestion de gaz chauds dans ladite entrée d'air (20), ladite alerte (61) étant émise tant que ladite probabilité est supérieure à un premier seuil de probabilité.

3. Procédé selon l'une quelconque des revendications 1 à 2,
où le procédé comporte une génération d'une pré-alerte (62) avec l'alerteur (60) tant que ladite probabilité est inférieure ou égale au premier seuil de probabilité et supérieure à un deuxième seuil de probabilité, le deuxième seuil de probabilité étant inférieur au premier seuil de probabilité, la pré-alerte (62) étant différente de l'alerte (61).

4. Procédé selon la revendication 1,
où le traitement (STP2) comporte une détermination avec le modèle d'intelligence artificielle à apprentissage automatique (52) d'une augmentation de température de l'air ingéré par ledit au moins moteur (15) depuis un temps prédéterminé, ladite alerte (61) étant émise tant que ladite augmentation de température est supérieure à un premier seuil de température.

5. Procédé selon la revendication 4,
où le procédé comporte une génération d'une pré-alerte (62) avec l'alerteur (60) tant que ladite augmentation de température est inférieure ou égale au premier seuil de température et supérieure à un deuxième seuil de température, le deuxième seuil de température étant inférieur au premier seuil de température, la pré-alerte (62) étant différente de l'alerte (61).

6. Procédé selon l'une quelconque des revendications 1 à 5,
où ladite mesure (STP1) de valeurs courantes de plusieurs paramètres de surveillance comporte une mesure de ladite température de l'air ingéré dans ladite entrée d'air (20) avec un senseur de température d'air ingéré (41) agencé dans ladite entrée d'air (20) ou en dehors de l'entrée d'air (20) et dans une zone (Z1) traversée par ledit air ingéré lorsque l'aéronef (1) est immobile et en l'absence de vent.

7. Procédé selon l'une quelconque des revendications 1 à 6,
où ladite mesure (STP1) de valeurs courantes de plusieurs paramètres de surveillance comporte une mesure de ladite température extérieure avec un senseur de température d'air extérieur (42) agencé en dehors d'une cellule (20) de l'aéronef (1) dans un volume (Z2) qui n'est pas traversé par ledit air ingéré et lesdits gaz chauds lorsque l'aéronef (1) est immobile et en l'absence de vent.

8. Procédé selon l'une quelconque des revendications 1 à 7,
où ladite mesure de valeurs courantes de plusieurs paramètres de surveillance comporte une mesure d'une vitesse de l'aéronef (1) avec un senseur de vitesse (43).

9. Procédé selon l'une quelconque des revendications 1 à 8,
où ladite mesure de valeurs courantes de plusieurs paramètres de surveillance comporte une mesure d'une valeur d'altitude de l'aéronef (1) avec un senseur d'altitude (44).

10. Procédé selon l'une quelconque des revendications 1 à 9,
où ladite mesure de valeurs courantes de plusieurs paramètres de surveillance comporte une mesure d'un déplacement de l'aéronef (1) avec un senseur de déplacement (45).

11. Procédé selon l'une quelconque des revendications 1 à 10,
où ladite mesure de valeurs courantes de plusieurs paramètres de surveillance comporte une mesure d'au moins un angle d'assiette de l'aéronef (1) avec un senseur d'assiette (46).

12. Système de détection (30) pour détecter une ingestion de gaz chauds au sein d'un aéronef (1),
**caractérisé en ce que** ledit système de détection (30) comporte plusieurs senseurs (40) pour mesurer respectivement des valeurs de plusieurs paramètres de surveillance, lesdits plusieurs senseurs (40) comprenant un senseur de température d'air ingéré (41) et un senseur de température d'air extérieur (42), ledit système de détection (30) comprenant un contrôleur (50) en communication avec lesdits senseurs (40) et configuré pour appliquer le procédé selon l'une quelconque des revendications 1 à 11, ledit système de détection (30) comprenant un alerteur (60) en communication avec ledit contrôleur (50) et configuré pour appliquer le procédé selon l'une quelconque des revendications 1 à 11.

13. Système de détection la revendication 12,
**caractérisé en ce que** lesdits plusieurs senseurs (40) comprennent au moins un des senseurs suivants : un senseur de vitesse (43) mesurant une vitesse d'un aéronef (1) équipé du système de détection (30), un senseur d'altitude (44) mesurant une valeur d'altitude d'un aéronef (1) équipé du système de détection (30), un senseur de déplacement (45) mesurant une information image d'un déplacement présent ou à venir d'un aéronef (1) équipé du système de détection (30), un senseur d'assiette (46) mesurant au moins un angle d'assiette d'un aéronef (1) équipé du système de détection (30).

14. Aéronef (1) ayant au moins une entrée d'air (20) configurée pour alimenter en air frais au moins un moteur (15),
**caractérisé en ce que** ledit aéronef (1) est muni d'un système de détection (30) selon l'une quelconque des revendications 12 à 13.

## Patentansprüche

1. Verfahren zum Erfassen des Eintritts heißer Gase in ein Luftfahrzeug (1), wobei das Luftfahrzeug (1) mindestens einen Lufteinlass (20) aufweist, der konfiguriert ist, um mindestens einen Motor (15) mit Frischluft zu versorgen,
**dadurch gekennzeichnet, dass** das Verfahren die folgenden Schritte umfasst, die nacheinander und wiederholt durchgeführt werden:
- Messen (STP1) von aktuellen Werten von jeweils mehreren Überwachungsparametern mit jeweils entsprechenden Sensoren (40), wobei die mehreren Überwachungsparameter eine Außentemperatur der das Luftfahrzeug (1) umgebenden Luft und eine Temperatur der in den Lufteinlass (20) eingetretenen Luft umfassen,
- Verarbeiten (STP2) der aktuellen Werte mit einem Controller (50) unter Verwendung eines gespeicherten selbstlernenden KI-Modells (52), wobei das selbstlernende KI-Modell konfiguriert ist, um anhand der aktuellen Werte einen Eintritt von heißen Gasen in den Lufteinlass (20) zu erkennen,
- im Anschluss an das Verarbeiten (STP2) Erzeugen (STP3) eines Alarms (61) mit einem Alarmgeber (60), solange während des Verarbeitens (STP2) der Eintritt von Heißgasen in den Lufteinlass (20) durch das selbstlernende KI-Modell (52) erkannt wird.

2. Verfahren nach Anspruch 1,
bei dem das Verarbeiten ein Bestimmen einer Wahrscheinlichkeit des Eintritts heißer Gase in den Lufteinlass (20) mit dem selbstlernenden KI-Modell (52) umfasst, wobei der Alarm (61) ausgegeben wird, solange die Wahrscheinlichkeit über einem ersten Wahrscheinlichkeitsschwellenwert liegt.

3. Verfahren nach einem der Ansprüche 1 bis 2,
bei dem das Verfahren das Erzeugen einer Vorwarnung (62) mit dem Alarmgeber (60) umfasst, solange die Wahrscheinlichkeit kleiner oder gleich dem ersten Wahrscheinlichkeitsschwellenwert und größer als ein zweiter Wahrscheinlichkeitsschwellenwert ist, wobei der zweite Wahrscheinlichkeitsschwellenwert kleiner als der erste Wahrscheinlichkeitsschwellenwert ist und die Vorwarnung (62) sich von dem Alarm (61) unterscheidet.

4. Verfahren nach Anspruch 1,
bei dem das Verarbeiten (STP2) das Bestimmen einer Temperaturzunahme der von dem mindestens einen Motor (15) angesaugten Luft seit einer vorgegebenen Zeit mit dem selbstlernenden KI-Modell (52) umfasst, wobei der Alarm (61) ausgegeben wird, solange die Temperaturzunahme größer als ein erster Temperaturschwellenwert ist.

5. Verfahren nach Anspruch 4,
wobei das Verfahren das Erzeugen einer Vorwarnung (62) mit dem Alarmgeber (60) umfasst, solange die Temperaturzunahme kleiner oder gleich dem ersten Temperaturschwellenwert und größer als ein zweiter Temperaturschwellenwert ist, wobei der zweite Temperaturschwellenwert kleiner als der erste Temperaturschwellenwert ist und die Vorwarnung (62) sich von dem Alarm (61) unterscheidet.

6. Verfahren nach einem der Ansprüche 1 bis 5,
bei dem das Messen (STP1) von aktuellen Werten mehrerer Überwachungsparameter das Messen der Temperatur der in den Lufteinlass (20) eingetretenen Luft mit einem Sensor (41) für die Temperatur der eingetretenen Luft umfasst, der im Lufteinlass (20) oder außerhalb des Lufteinlasses (20) und in einem Bereich (Z1) angeordnet ist, der von der eingetretenen Luft durchströmt wird, wenn das Luftfahrzeug (1) unbewegt ist und kein Wind weht.

7. Verfahren nach einem der Ansprüche 1 bis 6,
bei dem das Messen (STP1) von aktuellen Werten mehrerer Überwachungsparameter das Messen der Außentemperatur mit einem Außentemperatursensor (42) umfasst, der außerhalb einer Zelle (20) des Luftfahrzeugs (1) in einem Volumen (Z2) angeordnet ist, das nicht von der eingetretenen Luft und den heißen Gasen durchströmt wird, wenn das Luftfahrzeug (1) unbewegt ist und kein Wind weht.

8. Verfahren nach einem der Ansprüche 1 bis 7,
bei dem das Messen von aktuellen Werten mehrerer Überwachungsparameter das Messen einer Geschwindigkeit des Luftfahrzeugs (1) mit einem Geschwindigkeitssensor (43) umfasst.

9. Verfahren nach einem der Ansprüche 1 bis 8,
bei dem das Messen von aktuellen Werten mehrerer Überwachungsparameter das Messen eines Höhenwerts des Luftfahrzeugs (1) mit einem Höhensensor (44) umfasst.

10. Verfahren nach einem der Ansprüche 1 bis 9,
bei dem das Messen von aktuellen Werten mehrerer Überwachungsparameter das Messen einer Fortbewegung des Luftfahrzeugs (1) mit einem Fortbewegungssensor (45) umfasst.

11. Verfahren nach einem der Ansprüche 1 bis 10,
bei dem das Messen von aktuellen Werten mehrerer Überwachungsparameter das Messen mindestens eines Fluglagewinkels des Luftfahrzeugs (1) mit einem Fluglagensensor (46) umfasst.

12. Detektionssystem (30) zum Detektieren eines Heißgaseintritts in ein Luftfahrzeug (1),
**dadurch gekennzeichnet, dass** das Detektionssystem (30) mehrere Sensoren (40) zum Messen der Werte von jeweils mehreren Überwachungsparametern umfasst, wobei die mehreren Sensoren (40) einen Sensor (41) für die Temperatur der eingetretenen Luft und einen Sensor (42) für die Außentemperatur umfassen, wobei das Detektionssystem (30) eine Steuereinheit (50) umfasst, die mit den Sensoren (40) in Verbindung steht und konfiguriert ist, um das Verfahren gemäß einem der Ansprüche 1 bis 11 anzuwenden, wobei das Erfassungssystem (30) einen Alarmgeber (60) umfasst, der mit der Steuerung (50) in Verbindung steht und konfiguriert ist, um das Verfahren nach einem der Ansprüche 1 bis 11 anzuwenden.

13. Detektionssystem nach Anspruch 12,
**dadurch gekennzeichnet, dass** die mehreren Sensoren (40) mindestens einen der folgenden Sensoren umfassen: einen Geschwindigkeitssensor (43), der die Geschwindigkeit eines mit dem Detektionssystem (30) ausgestatteten Luftfahrzeugs (1) misst, einen Höhensensor (44), der den Höhenwert eines mit dem Detektionssystem (30) ausgestatteten Luftfahrzeugs (1) misst, einen Fortbewegungssensor (45), der Bildinformationen einer gegenwärtigen oder zukünftigen Fortbewegung eines mit dem Detektionssystem (30) ausgestatteten Luftfahrzeugs (1) misst, einen Fluglagensensor (46), der mindestens einen Fluglagenwinkel eines mit dem Detektionssystem (30) ausgestatteten Luftfahrzeugs (1) misst.

14. Luftfahrzeug (1) mit mindestens einem Lufteinlass (20), der konfiguriert ist, um mindestens einen Motor (15) mit Frischluft zu versorgen,
**dadurch gekennzeichnet, dass** das Luftfahrzeug (1) mit einem Detektionssystem (30) nach einem der Ansprüche 12 bis 13 ausgestattet ist.

## Claims

1. Method for detecting a hot gas ingestion within an aircraft (1), said aircraft (1) having at least one air inlet (20) configured to supply at least one motor (15) with fresh air,
**characterised in that** the method comprises the following steps carried out successively and iteratively:
- measuring (STP1) current values of several respective monitoring parameters with respective sensors (40), said several monitoring parameters comprising an outer temperature of the air surrounding the aircraft (1) and a temperature of the integrated air in said air inlet (20),
- processing (STP2) with a controller (50), said current values with a memorised automatic learning artificial intelligence model (52), said automatic learning artificial intelligence model being configured to detect, from said current values, a hot gas ingestion in said air inlet (20),
- following said processing (STP2), generating (STP3) with an alerter (60) of an alert (61), while a said hot gas ingestion in said air inlet (20) is detected by said automatic learning artificial intelligence model (52) during said processing (STP2).

2. Method according to claim 1,
where the processing comprises a determination with the automatic learning artificial intelligence model (52) of a hot gas ingestion probability in said air inlet (20), said alert (61) being emitted, while said probability is greater than a first probability threshold.

3. Method according to any one of claims 1 to 2,
where the method comprises a generating of a pre-alert (62) with the alerter (60), while said probability is less than or equal to the first probability threshold and greater than a second probability threshold, the second probability threshold being less than the first probability threshold, the pre-alert (62) being different from the alert (61).

4. Method according to claim 1,
where the processing (STP2) comprises a determination with the automatic learning artificial intelligence model (52) of a temperature increase of the ingested air by said at least one motor (15) from a predetermined time, said alert (61) being emitted, while said temperature increase is greater than a first temperature threshold.

5. Method according to claim 4,
where the method comprises a generation of a pre-alert (62) with the alerter (60), while said temperature increase is less than or equal to the first temperature threshold and greater than a second temperature threshold, the second temperature threshold being less than the first temperature threshold, the pre-alert (62) being different from the alert (61).

6. Method according to any one of claims 1 to 5,
where said measuring (STP1) of current values of several monitoring parameters comprises a measuring of said temperature of the ingested air in said air inlet (20) with an ingested air temperature sensor (41) arranged in said air inlet (20) or outside of the air inlet (20) and in a zone (Z1) passed through by said ingested air when the aircraft (1) is immovable and in the absence of wind.

7. Method according to any one of claims 1 to 6,
where said measuring (STP1) of current values of several monitoring parameters comprises a measuring of said outer temperature with an outer air temperature sensor (42) arranged outside of a cell (20) of the aircraft (1) in a volume (Z2) which is not passed through by said ingested air and said hot gas when the aircraft (1) is immovable and in the absence of wind.

8. Method according to any one of claims 1 to 7,
where said measuring of current values of several monitoring parameters comprises a measuring of a speed of the aircraft (1) with a speed sensor (43).

9. Method according to any one of claims 1 to 8,
where said measuring of current values of several monitoring parameters comprises a measuring of an altitude value of the aircraft (1) with an altitude sensor (44).

10. Method according to one of claims 1 to 9,
where said measuring of current values of several monitoring parameters comprises a measuring of a movement of the aircraft (1) with a movement sensor (45).

11. Method according to any one of claims 1 to 10,
where said measuring of current values of several monitoring parameters comprises a measuring of at least one trim angle of the aircraft (1) with a trim sensor (46).

12. Detection system (30) for detecting a hot gas ingestion within an aircraft (1),
**characterised in that** said detection system (30) comprises several sensors (40) for respectively measuring values of several monitoring parameters, said several sensors (40) comprising an ingested air temperature sensor (41) and an outer air temperature sensor (42), said detection system (30) comprising a controller (50) in communication with said sensors (40) and configured to apply the method according to any one of claims 1 to 11, said detection system (30) comprising an alerter (60) in communication with said controller (50) and configured to apply the method according to any one of claims 1 to 11.

13. Detection system according to claim 12,
**characterised in that** said several sensors (40) comprise at least one of the following sensors: a speed sensor (43) measuring a speed of an aircraft (1) equipped with the detection system (30), an altitude sensor (44) measuring an altitude value of an aircraft (1) equipped with the detection system (30), a movement sensor (45) measuring image information of a present or future movement of an aircraft (1) equipped with the detection system (30), a trim sensor (46) measuring at least one trim angle of an aircraft (1) equipped with the detection system (30).

14. Aircraft (1) having at least one air inlet (20) configured to supply at least one motor (15) with fresh air,
**characterised in that** said aircraft (1) is provided with a detection system (30) according to any one of claims 12 to 13.
